Europäisches Patentamt

European Patent Office

Office européen des brevets

(11) Publication number: 0 257 766
A2

# EUROPEAN PATENT APPLICATION

(21) Application number: 87306276.4

(22) Date of filing: 15.07.87

(51) Int. Cl.⁴: **B23K 28/00**

(30) Priority: 21.08.86 GB 8620390

(43) Date of publication of application:
02.03.88 Bulletin 88/09

(84) Designated Contracting States:
BE DE ES FR GB IT SE

(71) Applicant: THE ELECTRICITY COUNCIL
30 Millbank PO Box 209
London, SW1P 4RD(GB)

(72) Inventor: Bunting, Kevin
12 Hilltop Lane
Ness S. Wirral(GB)

(74) Representative: Cross, Rupert Edward Blount
et al
BOULT, WADE & TENNANT 27 Furnival Street
London EC4A 1PQ(GB)

(54) Method and apparatus for cutting or welding.

(57) A method and apparatus for cutting or welding utilising a supersonic plasma arc torch (10) is disclosed. Means for controlling the power density of the plasma jet are included which may comprise a gas flow valve arrangement (8) for modulating the gas flow to the torch (10) or an arrangemnt for modulating the electrical power fed, via terminals (16, 17), to the electrodes of the torch (10). The plasma jet may consequently be modulated at the desired rate of cutting or welding actions.

FIG. 1.

## METHOD AND APPARATUS FOR CUTTING OR WELDING

This invention relates to a method and apparatus for cutting or welding a workpiece using a supersonic plasma arc torch.

There is a requirement for providing perforated cuts in a variety of industries. The manufacture of certain types of cigarette paper, for instance, requires the cigarette paper to be perforated with extremely small holes. Hitherto this has been achieved by arranging the paper to contact a roller having a number of fine needles protruding from its surface which pierce the paper in the appropriate places.

Similarly, in the textile industry, automated laser cutters are known which can cut a single or multiple layer of textiles in specific patterns. Such cutters can also be readily modified to perforate as opposed to cut continuously: for example shutter arrangements are known which can modulate the intensity of the laser beam. Perforation is particularly useful as it allows the textile material to be readily separated into wanted and unwanted pieces at any stage after cutting. Although such devices are a considerable improvement over bladed cutters, the power density in the laser beam is not, generally, high enough to give the clean edge quality required: additional hot gas jets have, therefore, to be utilised to scour the cut regions.

The use of subsonic plasma arc torches for continuous or intermittent cutting is also known. Their application, however, is largely found in cutting or welding metals; they produce a cut of generally poor edge quality and the smallest holes that can generally be cut are of the order of 1cm in diameter. Further, when used for intermittent cutting, only a very low repetition rate of the cutting action is possible, thus precluding their use when a high speed of cut is required or possible.

More importantly, the use of supersonic plasma arc torches for continuous cutting is also known. Such continuous cutting devices have considerable advantages over laser beam and subsonic plasma arc torch cutters. In particular, the velocity of the plasma produced by such a device is sufficiently high to scour the cut regions, thus obviating the need for secondary scouring gas jets. Further, the diameter of the cutting region may be as small as 0.1 mm, allowing extremely fine continuous cutting. The term supersonic plasma arc torch used herein includes within its meaning both the water cooling apparatus and the arc generating equipment associated with the torch.

The operation of a supersonic plasma arc torch can be briefly outlined as follows, further information being disclosed in GB-A-1345031.

A gaseous mixture, such as argon and nitrogen, is fed under high pressure to a cylindrical region within the torch known as the plenum chamber. The exit from the plenum chamber is generally a conical throat leading to a cylindrical bore; the throat and bore constitute the nozzle of the torch. An arc is struck between a cathode, positioned on the central axis of the plenum chamber, and the walls of the plenum chamber of the nozzle, which consititute an anode: the gas is excited to a plasma state and, due to its high pressure and high velocity, the plasma is drawn through the cylindrical bore of the nozzle to form a jet. The pressure of the gas in the plenum chamber has to be sufficient for the plasma to be sonic as it travels down the bore.

The magnetic field generated by the arc current acts to constrict the diameter of the plasma stream passing through the cylindrical bore; this magnetic pinch effect does not, however, act on the plasma once it has left the nozzle: the plasma consequently diverges and, as if leaving a De Laval nozzle, goes supersonic. The properties of the plasma jet are now governed by well known hydrodynamic effects. In particular, oblique compression waves formed at the edge of the exit of the nozzle trace out a stationary conical path through the plasma jet. Due to the requirement for continuity of pressure, they are reflected from the surface boundary of the plasma jet as expansion waves. A stationary structure of alternating diamond shaped compression and expansion waves is thus set up which continues until damped by viscous action.

The power density in the compression regions is considerably greater than that in the expansion regions and constitutes an extremely effective and well defined cutting region. As a result supersonic plasma arc torches are able to provide continuous cutting at very high cutting speeds.

In accordance with the present invention, a method of cutting or welding a workpiece using a supersonic plasma arc torch comprises controlling the torch so that the power density at the workpiece is modulated at high frequency to be alternately above and below the threshold required for cutting or welding.

In this way intermittent cutting can be performed at relatively high frequencies comparable to the typical cutting speed of supersonic plasma arc jets so that a perforated cut can be produced. This extention of the use of a supersonic plasma arc torch to provide high frequency intermittent cutting is predicated on the discovery that supersonic plasma jets have a high intrinsic frequency response enabling modulation of the power of the plasma jet at a predetermined distance from the nozzle to be effected at relatively high frequencies. This enables very fine perforations to be made without reducing cutting speeds.

It should be understood that the modulation frequencies contemplated in the present invention are "high" in the sense of being at least several times a second. For example, with a cutting speed of, say, 5 c.m. per second, perforation every 1 minute can be produced with a modulation frequency of 50 HZ. On the other hand, perforations every 0.2 mm can be produced with a cutting speed of 50 c.m. per second with a modulation frequency of 2.5 KHz. Modulation frequencies up to at least 10 KHz are possible.

The invention thus combines the benefits of high quality, predictable perforating and extremely high cutting speed. Furthermore, the modulation of the power density of the plasma jet results in a reduction in the thermal load on the nozzle of the plasma arc torch, thereby extending the operating life of the nozzle.

According to a further feature of the invention, the plasma arc torch is controlled by modulating the gas flow to the torch and/or the electrical power to the torch electrodes at a high frequency equal to the desired rate of repetition of cutting or welding actions. This procedure modulates not only the power density but the diameter of the plasma jet as well. Consequently, since the speed of cut depends upon both power density and jet diameter, modulation of the electrical power and/or the gas flow controls the required rate of repetition of cutting or welding actions, or the welding or cut speed.

According to a further feature of the invention, an apparatus for cutting or welding of a workpiece using a supersonic plasma arc torch comprises means for controlling, at high frequency, the power density of the plasma jet at the workpiece to be alternately above and below the threshold required for cutting or welding.

In one embodiment an apparatus for cutting or welding of a workpiece using a supersonic plasma arc torch comprises gas flow control means operable to modulate the gas flow to the plasma arc torch at a high frequency equal to the desired rate of repetition of cutting or welding actions.

In a further embodiment an apparatus for cutting or welding of a workpiece using a supersonic plasma arc torch comprises electrical power control means operable to modulate the electrical power supplied to the electrodes of the plasma arc torch at a high frequency equal to the desired rate of repetition of cutting or welding actions.

It will be apparent that whenever the action of cutting is specified, the action of welding is also possible. Thus a spot-welded seam may also be produced extremely rapidly with the present method and apparatus.

It will also be apparent that the degree of modulation of the power density above and below the threshold required depends upon the material of the workpiece, the speed of cut required and the extent of marking of the uncut or non-welded regions which is considered acceptable. Consequently, the degree of modulation may vary from only a very few percent to nearly 100 percent.

Examples of the invention will now be described with reference to the accompanying drawings in which:

Figure 1 is a block diagram of a supersonic plasma arc torch having a gas flow control means operable to modulate the gas flow to the torch, and

Figure 2 is a block diagram of a supersonic plasma arc torch havng electrical power control means operable to modulate the electrical power supplied to the electrodes of the torch.

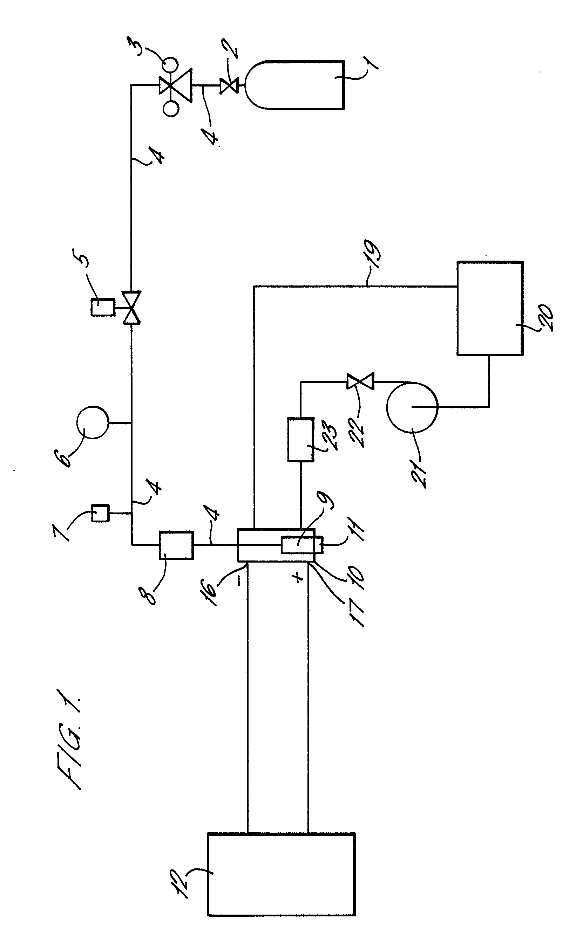

Referring to Figure 1, a gas supply bottle 1, containing argon or nitrogen gas or, preferably, a mixture of argon and nitrogen gas, is connected via a gas supply line 4, to an isolation valve 2 and a pressure regulator 3. After the pressure regulator 3, the gas passes through a constant flow valve 5, and subsequently through gas flow control means 8. A pressure indicating device 6 and a pressure relief means 7 are connected to the gas supply line 4 linking the valves 5 and 8. After valve 8, the gas passes via a further gas supply line 4, to the inlet of the supersonic plasma arc torch 10. A plenum chamber 9, within the supersonic plasma arc torch 10, connects the inlet to a nozzle 11, from which during operation, a plasma jet issues.

An electrical power supply 12, supplying power to the torch to generate the arc, has one of its two outputs connected to a terminal 16, to which the cathode (not shown) of the torch is further connected, and the other of its two outputs to a terminal 17, to which the anode (not shown) of the torch is further connected. Similarly, a water supply line 19 is connected to the torch for supplying cooling water to the nozzle of the torch; water is drawn from a water cooler 20 by a pump 21 and passed, via a valve 22 and a filter 23, to the plasma torch 10. Water is returned to the water cooler 20 from the torch by the supply line 19.

The cutting action of this embodiment of the invention will now be described.

The gaseous mixture drawn from the supply bottle 1 reaches, via gas supply line 4, the gas flow control means 8. This control means is operable to modulate the flow rate of the gaseous mixture passing through it at a high frequency equal to the rate of repetition of perforating actions: a high gas flow rate results in a plasma jet of greater power density and diameters than a lower gas flow rate. Although the shape of the stationary shock structure within the plasma jet changes, the positions of the high energy cutting regions remain approximately stationary. Thus, as the plasma jet passes over the workpiece to be cut, the high energy cutting region which is maintained to be coincident with the workpiece layer is alternately of a sufficient and then an insufficient power density to cut. In a further embodiment of the invention, the gas flow control means 8 comprises a sonic vibrator operable to set up resonant high frequency oscillations in the gaseous mixture feeding the plenum chamber 9: a high frequency modulation of the gas flow rate is thus established which results in a cutting action similar to that described above. It will be apparent that the resonant frequency of the gaseous mixture is dependent upon the volume of the resonating gaseous mixture: tuning to a particular resonant frequency is thus possible by varying the volume.

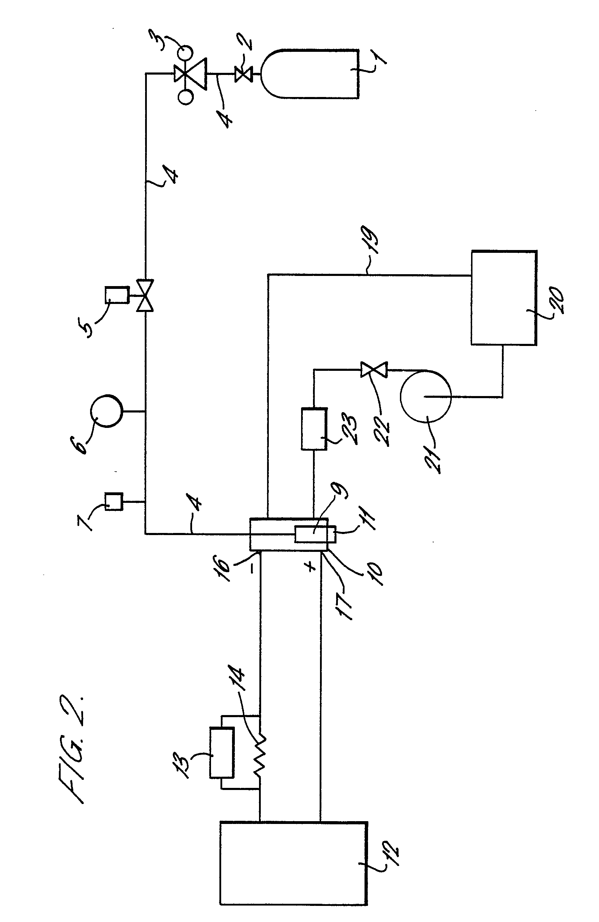

Referring now to Figure 2, the gas supply arrangement for this embodiment differs from that illustrated in Figure 1 in having no gas flow control means 8. The electrical power supply arrangement is also significantly different: an electrical power supply 12, supplying power to generate the arc, has on its two outputs connected to the input terminal of an electrical power control means 13 which is itself in parallel with a resistor 14. The output terminal of the control means 13 is connected to a terminal 16, to which the cathode (not shown) of the torch is further connected. The other of the two outputs from the power supply 12 is connected to a terminal 17 to which the anode (not shown) of the torch is further connected.

The water cooling apparatus is identical to that described with reference to the illustration of Figure 1 and will not be further described here.

The high frequency cutting or welding action of this embodiment of the invention will now be described. The electrical power control means 13 is operable to modulate at high frequency the power supplied to the arc: a high power arc results in a plasma jet of greater power density and diameter than a lower power arc. As the plasma jet passes over the workpiece to be cut the high energy cutting region which is maintained to be conincident with the workpiece layer is alternatively of a sufficient and then an insufficient power density to cut.

It will be apparent that the electrical power control means 13 may comprise standard transistor or diode circuit arrangements.

It will be further apparent that the modulation frequency of the plasma jet should differ from that capable of setting the gas fed into the plasma torch into resonant oscillation.

## Claims

1. A method of cutting or welding a workpiece using a supersonic plasma arc torch wherein the supersonic plasma arc torch is controlled so that the power density of the plasma jet at the workpiece is modulated at high frequency to be alternately above and below the threshold required for cutting or welding.

2. A method of cutting or welding as claimed in claim 1 wherein the plasma arc torch is controlled by modulating the gas flow to the plasma arc torch at a high frequency equal to the desired rate of repetition of cutting or welding actions.

3. A method of cutting or welding as claimed in claim 1 wherein the plasma arc torch is controlled by modulating the electrical power supplied to the electrodes of the plasma arc torch at a high frequency equal to the desired rate of repetition of cutting or welding actions.

4. A method of cutting or welding as claimed in claim 2 wherein the gas flow is modulated to control the required rate of repetition of cutting or welding actions, or the welding or cut speed.

5. A method of cutting or welding as claimed in claim 3 wherein the electrical power is modulated to control the required rate of repetition of cutting or welding actions, or the welding or cut speed.

6. A method of cutting or welding according to any preceding claims wherein the frequency of the modulation is at lest several Hz.

7. An apparatus for cutting or welding of a workpiece using a supersonic plasma arc torch wherein the supersonic plasma arc torch has means for controlling, at high frequency, the power density of the plasma jet at the workpiece to be alternately above and below the threshold required for cutting or welding.

8. An apparatus as claimed in claim 7 wherein the means for controlling the power density of the plasma jet comprises gas flow control means operable to modulate the gas flow to the plasma arc torch at a high frequency equal to the desired rate of repetition of cutting or welding actions.

9. An apparatus as claimed in claim 8 wherein the gas flow control means comprises a sonic vibrator operable to set the gas fed into the plasma arc torch into resonant oscillation.

10. An apparatus as claimed in claim 7 wherein the means for controlling the power density of the plasma jet comprises electrical power control means operable to modulate the electrical power supplied to the electrodes of the plasma arc torch at a high frequency equal to the desired rate of repetition of cutting or welding actions.

FIG. 1

0 257 766

FIG. 2.